# EUROPÄISCHE PATENTANMELDUNG

(11) **EP 2 168 990 A2**
(43) Veröffentlichungstag der Anmeldung: **31.03.2010**
(21) Anmeldenummer: 10150480.1
(22) Anmeldetag: 04.04.2006
(51) Int. Cl.: C08F 220/06, C08F 2/44, C05D 9/00

(54) **Wasserquellbares Hybridmaterial mit anorganischen Zusatzstoffen und Verfahren seiner Herstellung**

(30) Priorität: 07.05.2005 DE 102005021221
(62) Teilanmeldung aus: 06724009.3
(71) Anmelder: Geohumus International Research & Development GmbH, 60386 Frankfurt am Main (DE)
(72) Erfinder: Bentlage, Wulf, 60386 Frankfurt am Main (DE); Peppmöller, Reinmar, 47802 Krefeld (DE); Kunstmann, Jürgen, 65812 Bad Soden (DE); Zindel, Oliver, 63303 Dreieich (DE)
(74) Vertreter: Hansen, Norbert

(57) **Zusammenfassung**

Die vorliegende Erfindung betrifft ein neuartiges wasserquellbares Hybridmaterial umfassend eine strukturvernetzte Polymermatrix und darin gebundene anorganische Feststoffteilchen, mit einem zeitabhängigen Quellverhalten, das einer Wasseraufnahme von mindestens dem 7,5 fachen des Eigengewichts des Hybridmaterials innerhalb einer Stunde entspricht, sowie dessen Verwendungen. Die vorliegende Erfindung betrifft ferner ein Verfahren zur Herstellung eines wasserquellbaren Hybridmaterials umfassend das Bereitstellen einer Reaktionsmischung umfassend mindestens eine polymerisierbare Komponente und mindestens ein geeignetes Lösungsmittel, wobei der pH-Wert der Reaktionsmischung kleiner als 7 ist; Einmischen von anorganischen Feststoffteilchen und mindestens eines Vernetzers in die Reaktionsmischung; Starten der Polymerisationsreaktion; und Steuern der Polymerisationsreaktion, so dass unter Volumenvergrößerung relativ zum Volumen der Reaktionsmischung ein schwammartiges, wasserquellbares Hybridmaterial umfassend eine strukturvernetzte Polymermatrix und darin gebundene anorganische Feststoffteilchen erhalten wird.

## Beschreibung

Die vorliegende Erfindung betrifft ein neuartiges wasserquellbares Hybridmaterial umfassend eine strukturvernetzte Polymermatrix und darin gebundene anorganische Feststoffteilchen, mit einem zeitabhängigen Quellverhalten, das einer Wasseraufnahme von mindestens dem 7,5 fachen des Eigengewichts des Hybridmaterials innerhalb einer Stunde entspricht, sowie dessen Verwendungen. Die vorliegende Erfindung betrifft ferner ein Verfahren zur Herstellung eines wasserquellbaren Hybridmaterials umfassend das Bereitstellen einer Reaktionsmischung umfassend mindestens eine polymerisierbare Komponente und mindestens ein geeignetes Lösungsmittel, wobei der pH-Wert der Reaktionsmischung kleiner als 7 ist; Einmischen von anorganischen Feststoffteilchen und mindestens eines Vernetzers in die Reaktionsmischung; Starten der Polymerisationsreaktion; und Steuern der Polymerisationsreaktion, so dass unter Volumenvergrößerung relativ zum Volumen der Reaktionsmischung ein schwammartiges, wasserquellbares Hybridmaterial umfassend eine strukturvernetzte Polymermatrix und darin gebundene anorganische Feststoffteilchen erhalten wird.

### ERFINDUNGSHINTERGRUND

Acrylat(co)polymere, die Wasser oder wässrige Flüssigkeiten unter Bildung von Hydrogelen aufnehmen, sind bereits beschrieben worden. Hergestellt werden diese üblicherweise durch Verfahren der inversen Suspensions- oder Emulsionspolymerisation, wie sie in den US-PS 4,286,082, DE-PS 27 06 135, US-PS 4,340,706 und DE-PS 28 40 010 beschrieben worden sind. Auf diese Weise erhältliche Polymerisate werden auch Superabsorber genannt und üblicherweise im Hygiene- und Sanitärsektor verwendet. Es ist auch schon vorgeschlagen worden, die für den Hygienesektor gewonnenen, Hydrogele bildenden Polymerisate im botanischen Sektor als Wasserspeicher einzusetzen, z.B. in der deutschen Patentanmeldung DE 101 14 169.6, oder auch in der internationalen Patentanmeldung WO 03/000621.

Bei Materialien wie in der WO 03/000621 beschrieben wurde gefunden, dass eruptivstoffhaltige Superabsorber aufgrund ihres Gehaltes an mehrwertigen Metallionen, die als Komplexbildner wirken können, eigenen Gesetzmäßigkeiten sowohl bei der Herstellung als auch bei der Anwendung folgen. Insbesondere hat sich gezeigt, dass sowohl der Herstellungsprozeß, als auch die verwendeten Gesteinsmehle einen erheblichen Einfluss auf das Quellverhalten der in dieser internationalen Anmeldung beschriebenen Produkte haben. So wurde beispielsweise gefunden, dass bei der Herstellung dieser konventionellen Materialien aus basischer Polymerisationsmischung Partikel erhalten werden, die eine relativ lange Zeit brauchen, um vollständig aufzuquellen, teilweise 24 Stunden und mehr.

### ZUSAMMENFASSUNG DER ERFINDUNG

Es ist daher eine Aufgabe der Erfindung, ein Produkt bereitzustellen, das diese lange Quellzeit nicht mehr benötigt.

Es stellte sich ferner die Aufgabe, ein wasserquellbares Hybridmaterial zur Verfügung zu stellen, welches z.B. das für Pflanzen notwendige Mineral- und Nährstoffangebot in einer ballaststoffhaltigen, vernetzten Polymermatrix so bereitstellt, dass die Wasserspeicherfähigkeit bzw. Quellfähigkeit des Hybridmaterials nicht beeinträchtigt wird.

Darüber hinaus stellt sich die Aufgabe, Verfahren zur Herstellung von Mineralstoffe und anorganische Feststoffe enthaltende Hybridmaterialien für vielfältige Einsatzzwecke zur Verfügung zu stellen, welche zu Produkten führen, die im Wesentlichen frei von Monomerrückständen sind.

Die Lösungen der vorliegenden Erfindung ergeben sich aus den Gegenständen der unabhängigen Produkt-, Verfahrens- und Verwendungsansprüche. Vorteilhafte Ausgestaltungen sind in den jeweiligen Unteransprüchen angegeben.

### BESCHREIBUNG DER FIGUREN

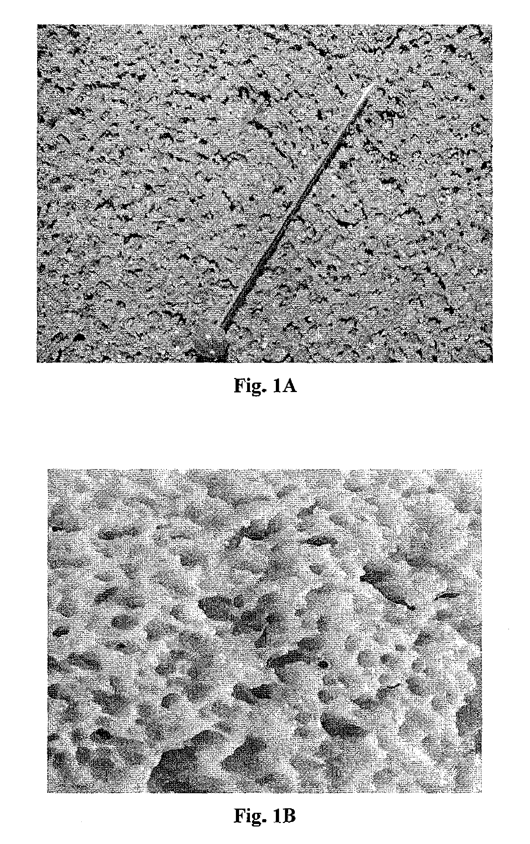

Figur 1 zeigt die schwammartige Struktur eines exemplarischen erfindungsgemäßen Hybridmaterials nach Beispiel 1, wobei Figur 1A das trockene Material mit einer Stecknadel als Größenvergleich, und Figur 1B das gleiche Material im Wasser-gesättigten, aufgequollenen Zustand zeigt.

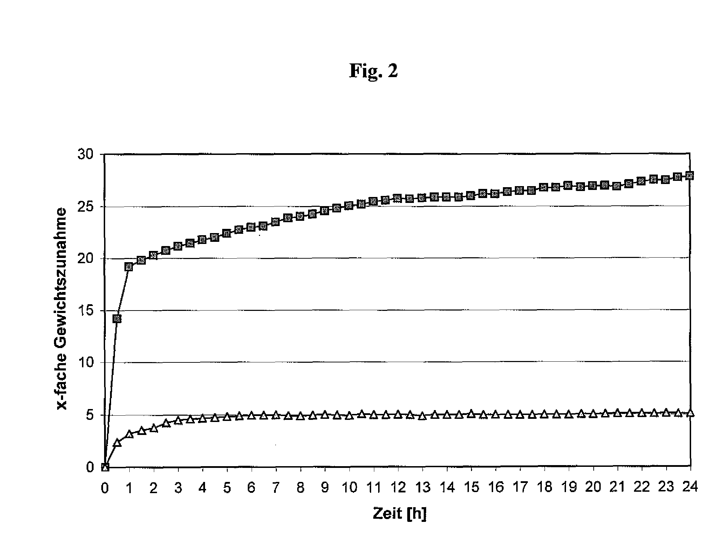

Figur 2 zeigt das Quellverhalten des Materials nach Beispiel 4 (untere Kurve, Dreiecke) gegenüber dem Hybridmaterial nach Beispiel 1 (obere Kurve, Quadrate).

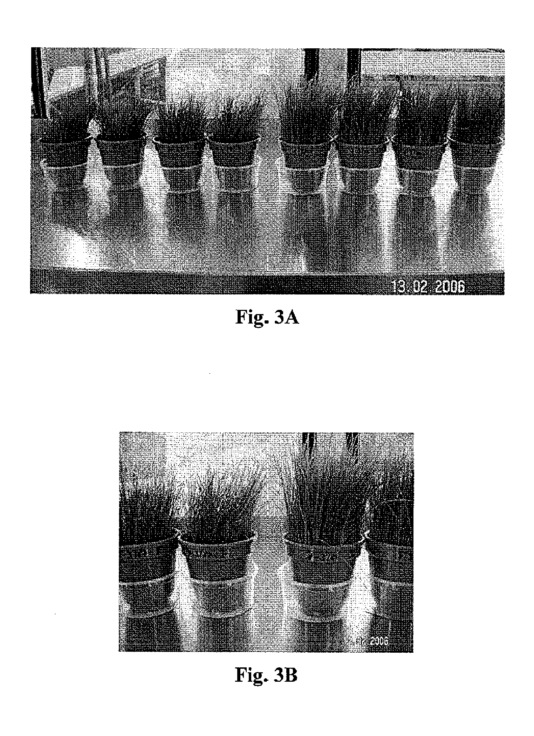

Figur 3 zeigt die unterschiedlichen Wuchshöhen von Gras bei Vergleich von Pflanzsubstrat ohne Zusatz von erfindungsgemäßen Hybridmaterial (linke Töpfe) mit Pflanzsubstrat enthaltend das Hybridmaterial (rechte Töpfe), bei einer Bewässerung von 57 ml alle drei Tage, wobei Figur 3B eine Ausschnittsvergrößerung des Fotos von Figur 3A darstellt.

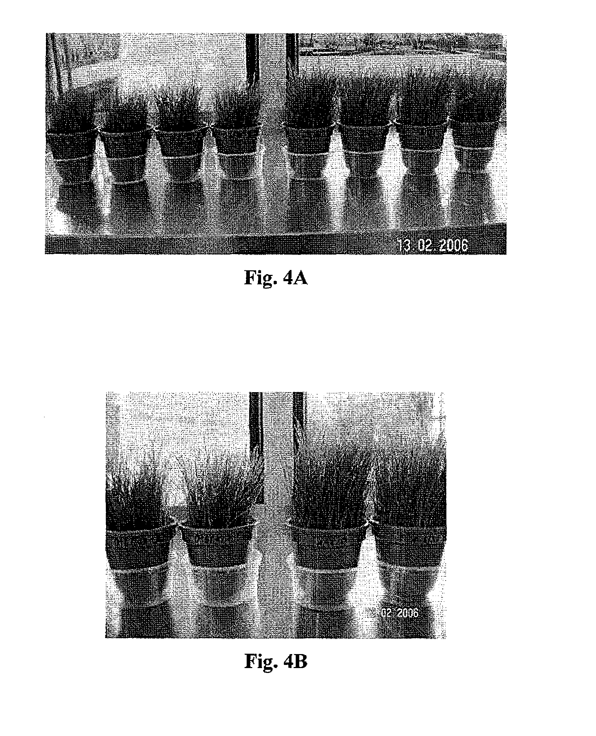

Figur 4 zeigt die unterschiedlichen Wuchshöhen von Gras bei Vergleich von Pflanzsubstrat ohne Zusatz von erfindungsgemäßen Hybridmaterial (linke Töpfe) mit Pflanzsubstrat enthaltend das Hybridmaterial (rechte Töpfe), bei einer Bewässerung von 57 ml alle sechs Tage, wobei Figur 4B eine Ausschnittsvergrößerung des Fotos von Figur 4A darstellt.

### DETAILLIERTE BESCHREIBUNG EXEMPLARISCHER AUSFÜHRUNGSFORMEN

Zur Lösung der oben genannten sowie weiterer Aufgaben wird in der vorliegenden Erfindung ein neues, wasserquellbares Hybridmaterial umfassend eine strukturvernetzte Polymermatrix und darin gebundene anorganische Feststoffteilchen bereitgestellt, welches außergewöhnliche Eigenschaften, insbesondere im Quellverhalten, aufweist. Ohne auf eine bestimmte Theorie festgelegt werden zu wollen, wird gegenwärtig angenommen, dass die neuartigen Eigenschaften des Hybridmaterials durch das Verfahren seiner Herstellung bedingt sein können.

Gemäß einer exemplarischen Ausführungsform der vorliegenden Erfindung wird ein wasserquellbares Hybridmaterial und ein Herstellungsverfahren hierfür bereitgestellt, umfassend eine strukturvernetzte Polymermatrix und darin gebundene anorganische Feststoffteilchen, wobei das Hybridmaterial bei Kontakt mit wässrigen Flüssigkeiten, z.B. Wasser, unter Wasseraufnahme schnell aufquillt und möglichst frühzeitig sein Aufnahmemaximum erreicht.

Unter "wasserquellbar" wird vorliegend ein Material verstanden, dass bei Kontakt mit Wasser oder wässrigen Flüssigkeiten wie z.B. Salzlösungen, Körperflüssigkeiten etc., oder anderen protisch-polaren Lösungsmitteln, unter Aufnahme dieser Flüssigkeiten eine Vergrößerung seines Eigenvolumens, vorzugsweise jedoch nicht seiner chemischen Struktur, erfährt. Der Begriff "strukturvernetzte Polymermatrix" bezeichnet vorliegend ein dreidimensional vernetztes Homo- oder Copolymer mit offener und/oder geschlossener Porenstruktur, welche die anorganischen Feststoffteilchen vorzugsweise in gebundener Form, z.B. chemisch gebunden und/oder in der Porenstruktur okkludiert, enthält. Bevorzugt ist, dass die strukturvernetzte Polymermatrix bzw. das Hybridmaterial auch im wassergesättigten Zustand ihre Struktur im Wesentlichen behält. Die strukturvernetzte Polymermatrix bzw. das Hybridmaterial kann vorzugsweise Wasser bis zur Sättigungsgrenze aufnehmen, ohne ein Hydrogel zu bilden, d.h. die Polymermatrix bzw. das Hybridmaterial bildet unter Wasseraufnahme kein flüssiges Hydrogel aus, wie dies bei Superabsorbern üblicherweise der Fall ist. Gewichtsprozentangaben sind, sofern nicht ausdrücklich anders angegeben, auf das Gesamtgewicht des trockenen Hybridmaterials, d.h. beispielsweise bei einem Wassergehalt von unter etwa < 0,1 Gew.-% und/oder nach 12 Stunden Trocknung des Materials, vorzugsweise bei etwa 40 °C, bevorzugt im Umluftofen bezogen. Alle hierin gemachten Zahlen-, Bereichs- und Eigenschaftsangaben sowie Parameter sind, sofern nicht ausdrücklich anders angegeben, grundsätzlich als beliebig miteinander kombinierbar zu verstehen.

Das Quellverhalten des Hybridmaterials kann z.B. bestimmt werden durch Kontaktieren des Hybridmaterials mit einer ausreichenden Menge z.B. vollentsalzten Wassers typischerweise bei Raumtemperatur von etwa 20-23 °C, bevorzugt 20 °C und Wiegen des abgetropften Materials nach bestimmten Zeitabständen.

Das Hybridmaterial weist gemäß einer beispielhaften Ausführungsform der Erfindung ein zeitabhängiges Quellverhalten auf, welches einer Wasseraufnahme von mindestens dem 7,5 fachen des Eigengewichts des trockenen Hybridmaterials innerhalb einer Stunde entspricht, vorzugsweise mindestens dem 10 fachen, bevorzugt dem 12,5 fachen, besonders bevorzugt mindestens dem 15 fachen des Eigengewichts des trockenen Hybridmaterials innerhalb der ersten Stunde. Nach 2 Stunden kann die Wasseraufnahame des Hybridmaterials bei mindestens dem 10 fachen des Eigengewichts des trockenen Hybridmaterials liegen, vorzugsweise mindestens dem 12,5 fachen, bevorzugt dem 15 fachen, besonders bevorzugt mindestens dem 17,5 fachen des Eigengewichts des trockenen Hybridmaterials. Nach 3 Stunden kann die Wasseraufnahme des Hybridmaterials bei mindestens dem 12,5 fachen des Eigengewichts des trockenen Hybridmaterials liegen, vorzugsweise mindestens dem 15 fachen, bevorzugt dem 17,5 fachen, besonders bevorzugt mindestens dem 20 fachen des Eigengewichts des trockenen Hybridmaterials. Die Wasseraufnahme des Hybridmaterials nach 24 h liegt mindestens beim 15 fachen, vorzugsweise beim 20 fachen, bevorzugt mindestens dem 25 fachen, besonders bevorzugt mindestens dem 30 fachen des Eigengewichts des trockenen Hybridmaterials, und kann mehr als das 50 fache betragen, ohne wie konventionelle Superabsorber ein Hydrogel zu bilden.

Das feststoffhaltige, wasserquellbare Hybridmaterial der vorliegenden Erfindung unterscheidet sich durch seine Herstellung und Zusammensetzung von herkömmlichen Materialien. Es besitzt insbesondere eine hohe Quellbarkeit und ist im ungetrockneten, restfeuchten Zustand beispielsweise mit Humus direkt vergleichbar. Beim Quellungsprozess in wässrigen Flüssigkeiten kann aufgrund der Zunahme des Porenvolumens ein Saugeffekt eintreten, der eine über die Absorptionsfähigkeit der Polymermatrix hinaus gehende Flüssigkeitsaufnahme bewirken kann.

In beispielhaften Ausführungsformen der Erfindung ist das Hybridmaterial im Wesentlichen frei von Alkalisilikat und/oder im Wesentlichen frei von Monomerrückständen. Erfindungsgemäß wird unter Begriff "im Wesentlichen frei von Monomerrückständen" ein Material verstanden, welches weniger als 1000 ppm, vorzugsweise weniger als 500 ppm und besonders bevorzugt weniger als 300 ppm, ggf. sogar weniger als 100 ppm oder weniger als 50 ppm Monomerrückstände enthält.

In bestimmten beispielhaften Ausführungsformen umfasst die Polymermatrix mindestens ein Homopolymer und/oder Copolymer von ethylenisch ungesättigten Komponenten, insbesondere der Acrylsäure oder von Acrylsäurederivaten. Die Polymermatrix kann beispielsweise durch Polymerisation von mindestens einem wasserlöslichen, ethylenisch ungesättigten, Säuregruppen enthaltenden Monomer, und ggf. zusätzlich mit mindestens einem damit polymerisierbaren, wasserlöslichen, ethylenisch ungesättigten Comonomeren gebildet werden, dem mindestens ein Vernetzer und ggf. weiteres wasserlösliches Polymer, vorzugsweise in Mengen von etwa 0,01 bis 5 Gew.-%, typischerweise 0,1 bis 2 Gew.-%. zugesetzt werden können. Als Vernetzer lassen sich z.B. Substanzen verwenden, die mindestens zwei ethylenisch ungesättigte Gruppen oder mindestens eine ethylenisch ungesättigte Gruppe und mindestens eine weitere funktionelle Gruppe enthalten, die gegenüber Säuregruppen reaktiv ist. Geeignete Monomere, Comonomere, wasserlösliche Polymere, Vernetzer und sonstige Polymerbestandteile sind weiter unten im Zusammenhang mit dem Herstellungsverfahren beschrieben.

In bestimmten Ausführungsformen können die Monomere bzw. Comonomere ggf. mit basischen Substanzen wie Natriumhydroxid, Salmiakgeist, Ammoniumhydroxid, Kaliumhydroxid, Natriumcarbonat, Kaliumcarbonat, Guanidin und Guanidincarbonat oder durch die Verwendung basischer Gesteinsmehle/Mineralstoffe als anorganische Feststoffteilchen teilneutralisiert sein.

In beispielhaften Ausführungsformen der Erfindung kann das Gewichtsverhältnis von Polymermatrix zu den anorganischen Feststoffteilchen zwischen 99:1 und 1:99, vorzugsweise zwischen etwa 90:10 bis 10:90 liegen, oder ggf. zwischen etwa 70:30 bis etwa 30:70. In bevorzugten Ausführungsformen liegt der Anteil an anorganischen Feststoffen bei mindestens etwa 50 Gew.-%, vorzugsweise mindestens etwa 60 Gew.-% und besonders bevorzugt mindestens etwa 70 oder sogar mindestens 80 Gew.-%. Der Polymeranteil kann bei mindestens etwa 5 Gew.-%, vorzugsweise mindestens etwa 10 Gew.-% oder mindestens etwa 20 Gew.-% liegen.

Die anorganischen Feststoffteilchen können z.B. gemahlene Mineralstoffe, Schlacken oder Gesteinsmehle umfassen, die mindestens ein Material ausgewählt aus Quarzsand, Ton, Schiefer, Sedimentgesteine, Meteoritengesteine, Eruptivgesteine, wie z.B. Lavagesteinsmehl, Grauwacke, Gneis, Trass, Basalt, Diabas, Dolomit, Magnesit, Bentonit, pyrogene Kieselsäure und Feldspat, umfassen. Diese Feststoffteilchen, eingebunden in die strukturvernetzte Polymermatrix des Hybridmaterials, können beispielsweise in landwirtschaftlichen bzw. botanischen Anwendungen die Bodenstruktur und das Bodenklima erheblich verbessern und durch Hinzufügung von Düngemitteln aus der Gruppe konventioneller K-, N-, P-Düngemittel und/oder Spurenelementen wie Eisen, Zink etc. eine optimale Nährstoffquelle für Pflanzen darstellen, wobei alle wichtigen Bedingungen für deren Wachstum erfüllt werden. Durch die poröse, schwammartige Struktur des Hybridmaterials der vorliegenden Erfindung kann die Bodenkapillarität verbessert und gleichzeitig die Bodenqualität durch die Anwesenheit fein gemahlener Mineralien, insbesondere fein gemahlenem Sand, positiv beeinflusst werden. Außerdem stellt der Mineralstoffgehalt der Hybridmaterialien eine Beschwerung des Produkts dar, so dass z.B. ein Aufschwimmen bei hoher Bodennässe verhindert werden kann.

Da die anorganischen Bestandteile des erfindungsgemäßen Hybridmaterials, besonders bezüglich der Spurenelemente und/oder in Verbindung mit der Partikelgröße den Polymerisationsablauf und damit die Schwammstruktur des Hybridmaterials beeinflussen können, hat es sich als vorteilhaft erwiesen in bestimmten beispielhaften Ausführungsformen der Erfindung die Partikelgröße der anorganischen Feststoffteilchen in geeigneter Weise zu wählen. Da dieses Gesteinsmehle gleichzeitig eine mineralische Nährstoffquelle für die Pflanzen darstellen, kann der Mahlgrad so gewählt werden, dass die Partikelgrößen der anorganischen Feststoffteilchen unter 200 µm, bevorzugt unter 100 µm liegen.

In bestimmten Ausführungsformen der Erfindung kann das Hybridmaterial z.B. Tonmaterialien wie Bentonit, Montmorillonit, Phyllosilikate, Zeolithe, etc. umfassen. Diese Tonmaterialien können z.B. die Eigenschaft besitzen, selbst geringe Flüssigkeitsmengen aufzunehmen und Kationen zu binden. Sie können daher zur Festigkeit und zum Quellungsverhalten des Hybridmaterials beitragen. Ihre Partikelgrößen können besonders bevorzugt zwischen etwa 0,1 - 8 mm, vorzugsweise zwischen etwa 0,3 - 5 mm liegen. Ihr Mengenanteil in bestimmten beispielhaften Ausführungsformen des Hybridmaterials der Erfindung kann zwischen etwa 5 Gew.-% und 60 Gew.-% liegen, bezogen auf das Gesamtgewicht des Hybridmaterials im trockenen Zustand.

Die anderen, im erfindungsgemäßen Hybridmaterial vorzugsweise zugesetzten anorganischen Feststoffe wirken vor allem auch produktbeschwerend und können damit eine wichtige Funktion erfüllen. Die erfindungsgemäßen Hybridmaterialien können zusätzlich in untergeordneter Menge weitere feste, ggf. fein gemahlene, anorganische oder organische Zusatzstoffe enthalten.

Außerdem kann das Hybridmaterial ggf. wasserlösliche und/oder in Wasser gelöste anorganische Zusatzstoffe ausgewählt aus mindestens einem aus Alkalisilikat, Kaliwasserglas, Natriumwasserglas, Alkalihydroxid, Kaliumhydroxid, Natriumhydroxid, Kieselsäure, Alkaliphosphat, Alkalinitrat, Erdalkalihydrogenphosphat, Phosphorsäure, Magnesiumoxid, Magnesiumhydroxid, Magnesiumcarbonat, Eisenoxide, Eisensalze, insbesondere Fe(II)-Salze, und/oder Borsäure umfassen.

Die Eigenschaften des erfindungsgemäßen Hybridmaterials können weiter modifiziert bzw. verbessert werden, wenn dieser zusätzlich wasserlösliche oder in Wasser gelöste, oder auch feste, gegebenenfalls fein zerkleinerte, wasserunlösliche organische Zusatzstoffe wie z. B. Harnstoff, Harnsäure, z.B. zur CO₂-Entwicklung während der Polymerisation und/oder als düngende Stickstoffquelle, Guanidin, z.B. als Düngemittel, Glykol, Glycerin, Polyethylenglykol, Polysaccharide, Stärke, Stärkederivate, Zellulose, Holz, Stroh, Torf, Altpapier, chromfreies Leder und Recyclinggranulat aus Holz oder Kunststoff, oder Kunststoffgranulat, Faserstoffe oder Vliesstoffe, z.B. zur Modifizierung der physikalischen Eigenschaften je nach gewünschtem Verwendungszweck, enthält.

In bestimmten Ausführungsformen können die erfindungsgemäßen Hybridmaterialien Mikroorganismen wie Algen, Bakterien, Hefen, Pilze, Pilzsporen und dergleichen, z.B. zur Nährstoffversorgung enthalten. Auch Farbstoffe, Geruchsstoffe, könne z.B. zur Verbesserung der sensorischen Eigenschaften zugesetzt werden, wo dies gewünscht wird. Fungizide, Pestizide, Herbizide und dergleichen können, wo erwünscht, zugesetzt werden, um z.B. eine aerosolfreie, umweltschonende Einbringung der Wirkstoffe wurzelnah, ggf. mit Depotwirkung bzw. langsamer, ggf. kontrollierter Freisetzung zu realisieren.

Das Hybridmaterial kann nach seiner Herstellung im wässrigen Medium einen Restfeuchtegehalt bei 20 °C von mindestens etwa 0,1 Gew.-%, bezogen auf das Gesamtgewicht des restfeuchten Materials, vorzugsweise bis zu etwa 60 Gew.-%, besonders bevorzugt etwa 20 bis 40 Gew.-%, insbesondere etwa 35 Gew.-% aufweisen. Dieser kann durch partielle Trocknung den gewünschten Erfordernissen entsprechend eingestellt werden.

Durch seine herstellungsbedingte, schwammartige Struktur weist das erfindungsgemäße Hybridmaterial bestimmter beispielhafter Ausführungsformen für eine Vielzahl von Anwendungen vorteilhafte mechanische Eigenschaften auf. In einer beispielhaften Ausführungsform kann das Hybridmaterial nach einer Stunde Lufttrocknung des Hybridmaterials bei 40 °C eine Shore A Härte (nach DIN 53505) von mindestens etwa 25, bevorzugt etwa 30 bis 50, aufweisen. Im fabrikationsfeuchten Zustand unmittelbar nach Herstellung, Feuchtegehalt etwa 30-40 Gew.-%, kann das Hybridmaterial zusätzlich oder alternativ eine Shore A Härte (DIN 53505) von mindestens etwa 15, vorzugsweise etwa 20 bis 30, aufweisen. Ferner kann das Hybridmaterial, im gesättigten Zustand nach Lagerung des Materials über 24 Stunden in vollentsalztem Wasser, zusätzlich oder alternativ noch eine Shore A Härte (DIN 53505) von mindestens etwa 1, vorzugsweise etwa 2 bis 10, aufweisen.

Das spezifische Gewicht des Hybridmaterials liegt, in Abhängigkeit von den verwendeten Feststoffteilchen und/oder polymeren Bestandteilen bei mindestens 1 g/cm³, vorzugsweise zwischen etwa 1,1 und 5 g/cm³, bevorzugt zwischen etwa 1,2 und 2,5 g/cm³.

### HERSTELLUNGSVERFAHREN

Nach den in der WO 03/000621 beschriebenen konventionellen Herstellungsverfahren werden bei neutralem oder alkalischem pH-Wert die Mineralstoffe als wässrige, Alkalicarbonat- und/oder Kohlendioxid-haltige Aufschlämmung vorgelegt und die ethylenisch ungesättigten, Säuregruppen enthaltenden Monomere einschließlich des Vernetzungsmittels anschließend eingetragen, wobei Kohlendioxid freigesetzt wird und Schaum entsteht. Nach Beendigung der Schaumentwicklung wird die Polymerisation durchgeführt. Alternativ hierzu werden bei neutralem oder alkalischem pH-Wert die Mineralstoffe als wässrige Aufschlämmung zusammen mit Alkalisubstanzen zur Teilneutralisation der Säuregruppen der Monomere vorgelegt und anschließend polymerisiert.

Auf diese Weise wurden üblicherweise neutrale oder schwach alkalische Erzeugnisse mit stabiler Schwammstruktur erhalten, die im pH-neutralen Zustand ähnlich wie die Superabsorber große Mengen von Wasser absorbieren. Bei beiden herkömmlichen Verfahren werden stets die Mineralstoffe vorgelegt und erst anschließend die Monomere zugesetzt.

Überraschenderweise wurde nun gefunden, dass durch eine Veränderung der Reihenfolge der Reaktandenzugabe und ggf. zusätzlich die Auswahl geeigneter pH-Wert Bereiche in der Reaktionsmischung bei geeigneter Steuerung der Polymerisationsreaktion die Eigenschaften des Hybridmaterials und insbesondere des Quellungsverhaltens deutlich verbessert werden können. Auch wurde gefunden, dass durch geeignete Steuerung der Polymerisationsbedingungen auf die Zugabe von Carbonaten und ähnlichen Verbindungen zur Gaserzeugung für die Aufschäumung des Hybridmaterials zu seiner Schwammstruktur weitgehend verzichtet werden kann.

Es hat sich gezeigt, dass ein Vorlegen der Säuregruppen-haltigen Monomere und das anschließende Zugeben der Mineralstoffe in dieser Reihenfolge besonders vorteilhaft für die Entstehung einer im Wesentlichen homogenen Schwammstruktur des resultierenden Materials sein kann. Die Polymerisation verläuft gleichmäßiger als bei den herkömmlichen Verfahren und führt zu Produkten mit einer deutlich verbesserten Anfangsquellung, d.h. die nach diesem Verfahren hergestellten Hybridmaterialien quellen nach Wasserzugabe sehr schnell auf und erreichen zu einem frühen Zeitpunkt ihre maximale Wasseraufnahme.

Die Polymerisationsreaktionen ethylenisch ungesättigter Säuregruppen enthaltender Monomere ist typischerweise exotherm, weshalb beispielsweise bei den konventionellen Superabsorber-Herstellungsverfahren die Reaktion bei möglichst niedrigen Temperaturen (typischerweise um 0°C) gestartet wird und nachfolgend die Reaktionswärme kontinuierlich abgeführt wird um die Temperatur möglichst niedrig zu halten.

In einer beispielhaften Ausführungsform der vorliegenden Erfindung wurde gefunden, dass durch geeignetes Steuern der Polymerisationsreaktion eine zumindest teilweise Verdampfung des Lösungsmittels bewirkt werden kann, so dass unter Volumenvergrößerung relativ zum Volumen der Reaktionsmischung ein schwammartiges, wasserquellbares Hybridmaterial umfassend eine strokturvernetzte Polymermatrix und darin gebundene anorganische Feststoffteilchen erhalten wird. Dieses Hybridmaterial weist insbesondere ein hervorragendes Quellungsverhalten auf, insbesondere eine deutlich schnellere anfängliche Wasseraufnahme bei exzellenter mechanischer Stabilität im gesättigten Zustand.

Ferner wurde gefunden, dass durch Vorlage der sauren Monomere bei pH-Werten unter 7 und anschließende Zugabe der anorganischen Feststoffteilchen unter anderem eine verbesserte Bindung der Mineralstoffe in der schwammartigen Polymermatrix erreicht werden kann, ohne das Quellungsverhalten nachteilig zu beeinflussen. Dies ist selbst dann möglich, wenn die anorganischen Feststoffteilchen wie beispielsweise Eruptivgesteine einen hohen Spurenelement- bzw. Elektrolytgehalt aufweisen, der in herkömmlichen Verfahren typischerweise zu Polymerisationsverzögerungen und einer anderen Materialstruktur führt, welche üblicherweise ein langsames Anfangsquellverhalten aufweisen.

In einer beispielhaften Ausführungsform der vorliegenden Erfindung wird ein Verfahren zur Herstellung eines wasserquellbaren Hybridmaterials umfassend eine strukturvernetzte Polymermatrix und darin gebundene anorganische Feststoffteilchen zur Verfügung gestellt, welches die folgenden Schritte umfasst:
a) Bereitstellen einer Reaktionsmischung umfassend mindestens eine polymerisierbare Komponente und mindestens ein geeignetes Lösungsmittel, wobei der pH-Wert der Reaktionsmischung kleiner als 7 ist;
b) Anschließendes einmischen von anorganischen Feststoffteilchen in die Reaktionsmischung;
c) Zugabe mindestens eines Vernetzers;
d) Starten der Polymerisationsreaktion; und
e) Steuern der Polymerisationsreaktion, so dass unter Volumenvergrößerung relativ zum Volumen der Reaktionsmischung ein schwammartiges, wasserquellbares Hybridmaterial umfassend eine strukturvernetzte Polymermatrix und darin gebundene anorganische Feststoffteilchen erhalten wird.

Wie bereits erwähnt, kann die Polymermatrix aus homopolymeren oder copolymeren, vernetzten Polymeren auf der Basis ethylenisch ungesättigter, Säuregruppen enthaltender Polymere, z.B. Polyacrylate, gebildet werden. In einer bevorzugten beispielhaften Ausführungsform der vorliegenden Erfindung wird daher ein Verfahren zur Herstellung eines wasserquellbaren Hybridmaterials umfassend eine strukturvernetzte Polymermatrix und darin gebundene anorganische Feststoffteilchen zur Verfügung gestellt, welches die folgenden Schritte umfasst:
a) Bereitstellen einer Reaktionsmischung umfassend mindestens ein ethylenisch ungesättigtes, Säuregruppen enthaltendes Monomer und mindestens ein geeignetes Lösungsmittel, wobei der pH-Wert der Reaktionsmischung kleiner als 7 ist;
b) Anschließendes einmischen von anorganischen Feststoffteilchen in die Reaktionsmischung;
c) Zugabe mindestens eines Vernetzers;
d) Starten der Polymerisationsreaktion; und
e) Steuern der Polymerisationsreaktion, so dass unter Volumenvergrößerung relativ zum Volumen der Reaktionsmischung ein schwammartiges, wasserquellbares Hybridmaterial umfassend eine strukturvernetzte Polymermatrix und darin gebundene anorganische Feststoffteilchen erhalten wird.

Die mindestens eine polymerisierbare Komponente kann ausgewählt sein aus wasserlöslichen, ethylenisch ungesättigten, Säuregruppen enthaltenden Monomeren umfassend mindestens eines aus Acrylsäure, Methacrylsäure, Ethacrylsäure, Sorbinsäure, Maleinsäure, Fumarsäure, Itaconsäure, Vinylsulfonsäure, Methacrylaminoalkylsulfonsäure, Vinylphosphonsäure, oder Vinylbenzolphosphonsäure.

Der Anteil an Comonomeren in der Reaktionsmischung kann 0 bis zu 50 Gew.-% betragen, bezogen auf die polymerisierbaren Komponenten der monomeren Reaktionsmischung. Wasserlösliche, ethylenisch ungesättigte Comonomere können ausgewählt werden aus mindestens einem aus ungesättigten Aminen wie Acrylamid, Methacrylamid, N-Alkylacrylamid, N-Alkylmethacrylamid, N-Dialkylaminoacrylamid, N-Dialkylaminomethacrylamid, N-Methylolacrylamid, N-Methylolmethacrylamid, N-Vinylamid, N-Vinylformamid, N-Vinylacetamid, N-Vinyl-n-methylacetamid, N-Vinyl-n-methylacetamid, N-Vinyl-n-formamid; Vinylpyrrolidon, Hydroxyethylenacrylat, Hydroxyethylmethacrylat, Acrylsäureester und/oder Methacrylsäureester. Besonders bevorzugt ist Acrylsäure als Monomer, vorzugsweise ohne den Zusatz von Comonomeren.

Der monomeren Reaktionsmischung können weiterhin wasserlösliche Polymere bis zu 30 Gew.-% zugesetzt werden, bezogen auf die polymerisierbare Substanz der monomeren Reaktionsmischung. Als lösliche Polymere können Homo- oder Copolymerisate der zuvor genannten Monomeren oder Comonomeren, teilverseiftes Polyvinylacetat, Polyvinylalkohol, Stärke, Stärkederivate, pfropfpolymerisierte Stärke, Zellulose und Zellulosederivate wie Carboxymethylzellulose, Hydroxymethylzellulose sowie Galaktomannose und dessen oxalkylierte Derivate, sowie beliebige Mischungen dieser eingesetzt werden. Diese wasserlöslichen Polymere werden im wesentlichen physikalisch eingebunden.

Die Monomere bzw. Comonomere werden in mindestens einem geeigneten Lösungsmittel vorgelegt. Das mindestens eine Lösungsmittel kann in einer beispielhaften Ausführungsform der Erfindung protisch-polare Lösungsmittel, wie Wasser, wässrige Lösungen, Alkohole wie Methanol, Ethanol; Alkylamine, Tetrahydrofuran, Dioxan, und beliebige Mischungen davon, insbesondere bevorzugt jedoch Wasser, umfassen. Ferner können diese protisch-polaren Lösungsmittel ggf. auch in Mischungen mit aprotischen und/oder unpolaren Lösungsmitteln verwendet werden, ggf. unter Zusatz von Tensiden, Emulgatoren oder anderen amphiphilen Stoffen, um eine möglichst homogene Reaktionsmischung zu erhalten.

In bevorzugten beispielhaften Ausführungsformen der Erfindung kann der pH-Wert der Reaktionsmischung vor Zugabe der anorganischen Feststoffteilchen kleiner als 7 sein. Besonders bevorzugt liegt der pH-Wert unter 6,8, vorzugsweise unter 6,5, insbesondere unter pH 6 oder unter pH 5, etwa zwischen pH 0 und pH 6 oder zwischen pH 1 und 5.

Der Reaktionsmischung aus Lösungsmittel und mindestens einer polymerisierbaren Komponente kann mindestens ein Vernetzer zugesetzt werden. Bevorzugt wird der mindestens eine Vernetzer in einer Menge von 0,01 bis 5 Gew.-%, vorzugsweise 0,1 bis 2,0 Gew.-%, bezogen auf die Gesamtheit der polymerisierbaren Monomeren, zugegeben. Als Vernetzer können alle Substanzen verwendet werden, die mindestens zwei ethylenisch ungesättigte Gruppen oder mindestens eine ethylenisch ungesättigte Gruppe und mindestens eine weitere funktionelle Gruppe enthalten, die gegenüber Säuregruppen reaktiv ist. Als beispielhafte Vertreter werden hier genannt: Methylenbisacrylamid, Mono-, Di- und Polyester der Acrylsäure, Methacrylsäure, Itaconsäure und Maleinsäure von mehrwertigen Alkoholen wie von Butandiol, Hexandiol, Polyethylenglykol, Trimethylolpropan, Pentaerythrit, Glycerin und Polyglycerin, sowie von den daraus resultierenden oxalkylierten Homologen, z. B. Butandioldiacrylat, ferner auch die Ester dieser Säuren mit Allylalkohol und seinen oxalkylierten Homologen. Weiter seien beispielhaft aufgeführt: N-Diallylacrylamid, Diallylphthalat, Triallylcitrat, Trimonoallyl-polyethylenglykolethercitrat, Allylacrylamid, Triallylzitrat, Trimonoallyl, Polyethylenglykoletherzitrat sowie Allylether von Di- und Polyolen und deren Oxethylate. Vertreter der zuletzt genannten Gattung sind Polyallylether von Glycerin, Trimethylolpropan, Pentaerythrit und deren Oxethylate, wie auch Tetraallyloxyethan und Polyglycidylallylether wie Ethylenglykoldiglycidylether und Glyceringlycidylether. Ferner sind geeignet beispielsweise auch Diamine und deren Salze mit mindestens zwei ethylenisch ungesättigten Substituenten wie etwa Di- und Triallylamin und Tetraallylammoniumchlorid. In beispielhaften Ausführungsformen der Erfindung können ggf. mindestens zwei verschiedene Vernetzern verwendet werden, wobei sich diese vorzugsweise in ihrer Hydrolysestabilität unterscheiden, oder mindestes drei Vernetzer. Bevorzugte Vernetzer bei mindestens zwei Vernetzern sind z.B. Butandioldiacrylat und Methylenbisacrylamid.

Vor, nach oder zusammen mit dem mindestens einen Vernetzer können die anorganischen Feststoffteilchen zugesetzt werden. Besonders bevorzugt werden die anorganischen Feststoffteilchen in die Reaktionsmischung gegeben, welche die mindestens eine polymerisierbare Komponente bereits enthält. Durch Vorlegen der polymerisierbaren Komponente(n), insbesondere von Säuregruppen enthaltenden, ethylenisch ungesättigten Monomeren, und insbesondere bei saurem pH-Werten, und danach anschließende Zugabe der anorganischen Feststoffteilchen können Hybridmaterialien mit besonders ausgeprägtem Anfangsquellverhalten, d.h. z. B. schneller Aufquellung unmittelbar nach Wasserkontakt erhalten werden. Die anorganischen Feststoffteilchen können z.B. gemahlene Mineralstoffe, Schlacken oder Gesteinsmehle umfassen, die mindestens ein Material ausgewählt aus Quarzsand, Ton, Schiefer, Sedimentgesteine, Meteoritengesteine, Eruptivgesteine, wie z.B. Lavagesteinsmehl, Grauwacke, Gneis, Trass, Basalt, Diabas, Dolomit, Magnesit, Bentonit, pyrogene Kieselsäure und Feldspat, umfassen. Diese Feststoffteilchen können auch aus Düngemitteln aus der Gruppe konventioneller K-, N-, P- Düngemittel ausgewählt werden, die ggf. zusätzlich zu den oben genannten Mineralstoffen in die Reaktionsmischung eingegeben werden.

Die Menge an anorganischen Feststoffteilchen kann je nach Bedarf und gewünschtem Verwendungszweck entsprechend gewählt und eingestellt werden, wobei übliche Mengen und Mengenverhältnisse oben genannt sind. Bevorzugt sind hochfeststoffhaltige Hybridmaterialien, vorzugsweise mit anorganischen Feststoffgehalten von mehr als 60 Gew.-% bezogen auf trockenes Hybridmaterial. Der Gehalt an Eruptivgesteinen, z.B. Lavagestein, liegt dabei vorzugsweise unter 35 Gew.-%, bezogen auf das trockene Hybridmaterial, insbesondere unter 30 Gew.-%, besonders bevorzugt unter 25 Gew.-%. Besonders bevorzugt enthalten die anorganischen Feststoffteilchen keine in Gegenwart von Säure Kohlendioxidentwickelnden Mineralstoffe oder Salze.

Durch Verwendung basischer Feststoffteilchen in geeigneter Menge kann die mindestens eine polymerisierbare Komponente zumindest teilweise hydrolysiert werden, und so der pH-Wert, der Polymerisationsverlauf und letztlich die Produktstruktur geeignet modifiziert werden. Vorzugsweise werden etwa maximal 80 Mol-%, z.B. etwa 60 bis 80 Mol-% und in beispielhaften Ausführungsformen maximal 40 Mol-% der Säuregruppen der Monomere neutralisiert. Alternativ oder zusätzlich zur Verwendung von basischen Feststoffteilchen kann ggf. eine Teilneutralisation oder pH-Wert Einstellung durch Zusatz mindestens einer basischen Substanz, z.B. ein Erdalkali- und/oder Alkalihydroxid, Kalk, Alkylamine, Salmiakgeist etc., wie auch die oben genannten Verbindungen, vorgenommen werden.

Durch geeignete Homogenisierungsmaßnahmen, beispielsweise Rühren, werden die Feststoffteilchen in der Reaktionsmischung im wesentlichen gleichmäßig verteilt, wobei das Rühren vorzugsweise auch während der Polymerisation fortgesetzt wird.

Zur Initiierung der radikalischen Polymerisation können konventionelle Redoxsysteme verwendet werden, z. B. Peroxo- oder Azoverbindungen wie Kaliumperoxomonosulfat, Kaliumperoxodisulfat, tert.-Butylhydroperoxid, 2,2'-Azo-bis(2-methylenpropionamidin)-dihydrochlorid oder Wasserstoffperoxid, ggf. zusammen mit einem oder mehreren Reduktionsmitteln wie Kaliumsulfit, Kaliumdisulfit, Kaliumformamidinsulfinat und Ascorbinsäure. Hierbei wird vorzugsweise das Oxidationsmittel vorgelegt. In besonders bevorzugten beispielhaften Ausführungsformen der Polymerisation kann die Initiierung auch durch Fotokatalyse in Verbindung mit geeigneten Sensibilisatoren erfolgen.

Zur Förderung der Ausbildung einer porösen Schwammstruktur des Hybridmaterials kann in beispielhaften Ausführungsformen der Erfindung die Polymerisationsreaktion so gesteuert werden, dass sich das Hybridmaterial unter Volumenvergrößerung relativ zum Volumen der Reaktionsmischung bildet. Vorzugsweise wird insbesondere die Reaktionswärme durch geeignete Maßnahmen kontrolliert.

In beispielhaften Ausführungsformen der Erfindung kann die Reaktionswärme der exothermen Polymerisationsreaktion so gesteuert werden, dass etwa 0,1 bis 30 Gew.-%, vorzugsweise etwa 2 bis 15 Gew.-%, des mindestens einen Lösungsmittels verdampfen. Das verdampfende Lösungsmittel wird hierbei als Schäumungsgas das Hybridmaterial unter Volumenzunahme aufschäumen, so dass typischerweise auf den Zusatz von Schäumungsmitteln wie Gas-entwickelnde Stoffe verzichtet werden kann, zumal auch bei der Polymerisation bestimmter Monomere ggf. abgespaltene Gase wie Kohlendioxid freigesetzt werden können. Sofern erwünscht, kann jedoch zusätzlich auch mindestens ein Gasbildner zugesetzt werden, beispielsweise Carbonatsalze und/oder Harnstoff, um die Volumenvergrößerung zumindest teilweise hierdurch zu bewirken oder zu unterstützen. In besonders bevorzugten beispielhaften Ausführungsformen der Erfindung wird der Reaktionslösung bzw. dem Hybridmaterial kein Carbonatsalz und/oder kein Mineralstoff bzw. allgemein keine Substanz, insbesondere keine anorganische Substanz, zugesetzt, welcher in Gegenwart von Säuren Kohlendioxid freisetzt. Falls zur Unterstützung der Schwammbildung des Hybridmaterials neben der Wasserdampfentwicklung Kohlendioxid freigesetzt werden soll, werden hierzu vorzugsweise organische Verbindungen, z.B. Harnstoff oder dergleichen verwendet, welche neben der Kohlendioxidentwicklung eine vorteilhafte Stickstoffquelle darstellen.

In weiteren beispielhaften Ausführungsformen der Erfindung kann die Reaktionswärme alternativ oder zusätzlich auch durch das Mengenverhältnis der mindestens einen polymerisierbaren Komponente zu dem mindestens einen geeigneten Lösungsmittels bzw. über das Volumen des Lösungsmittels gesteuert werden. Vorzugsweise liegt das Mengenverhältnis der mindestens einen polymerisierbaren Komponente zu dem mindestens einen geeigneten Lösungsmittels zwischen etwa 1:1 bis 1:5. Alternativ oder zusätzlich kann die Reaktionswärme auch durch Kühlen der Reaktionsmischung gesteuert werden.

In beispielhaften Ausführungsformen der Erfindung kann durch Steuern der Polymerisationsreaktion eine Volumenvergrößerung relativ zum Volumen der Reaktionsmischung vor Einsetzen der Polymerisationsreaktion von mindestens 10 %, vorzugsweise mindestens 20 %, insbesondere mindestens 50 %, und besonders bevorzugt mindestens 100 % bewirkt werden.

Bevorzugt wird die mittlere Reaktionstemperatur der Polymerisationsreaktion zwischen etwa 50 °C und 130 °C gehalten, vorzugsweise von etwa 60 bis 110 °C, insbesondere von etwa 70 bis 100 °C. Die Starttemperatur der Reaktionsmischung kann zwischen etwa 4°C und etwa 40 °C, vorzugsweise bei etwa 15 °C bis etwa 30 °C, z.B. etwa bei Raumtemperatur, d.h. etwa 20 bis 22 °C, eingestellt werden.

In bestimmten beispielhaften Ausführungsformen der Erfindung können, beispielsweise in Schritt b), zusätzlich organische Feststoffteilchen wie oben aufgelistet eingemischt werden, wodurch diese auch in der Polymermatrix gebunden werden. Bevorzugte Beispiele hierfür können mindestens einen organischen Stoff aus der Gruppe der Mikroorganismen, Bakterien Pilze, Algen, Hefen, Fungizide, Pestizide, Herbizide, Zellulose, Stärke, Derivate von Stärken, Kunststoffe oder Polysaccharide; Holz, Stroh, Torf, Altpapier, chromfreies Leder und Recyclinggranulat, Kunststoffgranulat, Faserstoffe oder Vliesstoffe umfassen.

Darüber hinaus kann der Reaktionsmischung mindestens ein wasserlöslicher, wasserquellbarer und/oder in Wasser gelöster Zusatzstoff zugesetzt werden, wie diese oben aufgelistet sind. Bevorzugte Beispiele hierfür umfassen mindestens einen aus Alkalisilikat, Kaliumwasserglas, Natriumwasserglas, Kaliumhydroxid, Natriumhydroxid, oder Harnstoff.

Im Gegensatz zu herkömmlichen Verfahren ist bei dem hierin beschriebenen Verfahren eine Nachbehandlung wie z.B. eine Nachvernetzung, Neutralisierung und dergleichen üblicherweise nicht erforderlich, d.h., nach dem hier beschriebenen verfahren kann das Hybridmaterial in einer Form erhalten werden, die für die hier beschriebenen Anwendungszwecke unmittelbar geeignet ist.

Das Hybridmaterial gemäß der vorliegenden Erfindung kann durch geeignete Auswahl der Bestandteile und/oder geeignete Verfahrenskontrolle im Wesentlichen frei von Monomerrückständen erhalten werden, was jedoch nicht immer der Fall sein muss. Insbesondere bei Anwendungen im landwirtschaftlichen Bereich ist es jedoch vorteilhaft, dass der nach der Polymerisation ggf. noch im Produkt verbliebene, geringe Restmonomergehalt jegliche Gefährdung natürlichen Lebens ausschließt. Nach konventionellen Verfahren im Bereich der Superabsorber können die Polymerisate nach der Herstellung einer Intensivtrocknung unterzogen werden, um Monomerrückstände zu entfernen. Dabei liegen die Trocknungstemperaturen typischerweise weit oberhalb der Siedetemperatur der Acrylsäure (Kp: 142°C), im allgemeinen oberhalb 170°C. Zwangsläufig ist unter diesen Bedingungen auch die Gefahr einer beginnenden Produktzersetzung vorhanden.

Gemäß einer bestimmten beispielhaften Ausführungsform der Erfindung kann daher zur Verminderung bzw. Entfernung des Restmonomergehaltes im Hybridmaterial ein Reinigungsverfahren angewandt werden. Danach kann das Hybridmaterial thermisch oder chemisch nachbehandelt werden, etwa durch Erhitzen des Hybridmaterials im Umluftofen, oder, insbesondere bevorzugt, mit Heißdampf bei Temperaturen von etwa 100 bis etwa 150°C, ggf. unter Druck. Dies kann beispielsweise dadurch erfolgen, dass Produkte mit restlicher monomerer Acrylsäure oder anderen Schadstoffen in einen wärmeisolierten Drucktopf mit unterer Wasserdampfzuleitung und oberem Überdruckventil gegeben und anschließend einer Wasserdampfbehandlung unterzogen werden. Die Temperatur des Wasserdampfes kann vorteilhaft zwischen 100 bis 150°C, insbesondere zwischen 100 und 120°C, unter Druck entsprechend geringer, eingestellt werden.

Überraschenderweise wurde festgestellt, dass diese Wasserdampfbehandlung bereits nach kurzer Zeit eine deutliche Minderung des Acrylsäure- bzw. Monomeranteils bewirkte. Als besonders vorteilhaft ist anzusehen, dass auch Ammoniumpolycarboxylate ohne Gefahr einer Zersetzung mit Wasserdampf behandelt werden konnten. Wenn die Behandlung zusätzlich unter Druck durchgeführt wird, kann damit gleichzeitig eine Abnahme des Wassergehalts im Hybridmaterial verbunden sein, so dass auf diese Weise ebenfalls zumindest eine Teiltrocknung durchgeführt werden kann. Zusätzlich ergibt sich vor, während oder am Ende des Dämpfungsprozesses die Möglichkeit, durch Zugabe beispielsweise von Schwefeldioxidgas oder Ammoniak zum Wasserdampf oder getrennt davon die Entfernung noch verbliebener restlicher Minimalmengen von Acrylsäure oder anderen Monomeren oder Comonomeren zu erreichen bzw. zu beschleunigen.

Mit dieser Nachbehandlung bzw. diesem Reinigungsverfahren lassen sich in vorteilhafter Weise alle polycarboxylathaltigen Produkte mit einem Anteil von Acrylsäure , also auch jede Art von Superabsorbern, insbesondere auch die Hybridmaterialien wie in dieser Erfindung beschrieben, vorzugsweise ohne Totaltrocknung in ihrem Restmonomergehalt auf ein Niveau mindern, das eine Gefährdung des natürlichen Lebens ausschließt oder zumindest minimiert.

Die beschriebenen Nachbehandlungsschritte können beim Hybridmaterial darüber hinaus alternativ oder zusätzlich auch zur Nachvernetzung, zur Teilhydrolyse und/oder einfach zur Trocknung bzw. zur Einstellung eines definierten Restfeuchtegehaltes des Hybridmaterials angewendet werden. Geeignete Restfeuchtegehalte sind weiter oben definiert. Bevorzugt wird das Hybridmaterial nach seiner Herstellung nicht vollständig getrocknet.

Ein optionaler Gegenstand der vorliegenden Erfindung ist daher auch ein Verfahren zur Entfernung von restlicher Acrylsäure aus partikelförmigen, polycarboxylathaltigen Polymerprodukten und Mischungen enthaltend diese Polymerprodukte, durch Behandlung mit Wasserdampf bei einer Temperatur von etwa 100° bis 160°C, ggf. unter Druck, unterzogen werden. Vorzugsweise erfolgt die Behandlung mit Wasserdampf einer Temperatur von etwa 100 bis 150°C, insbesondere bei etwa 20 bis 140°C, unter Druck ggf. geringer. Optional können zusätzlich dem Wasserdampf Ammoniak oder Schwefeldioxid zugemischt werden, vorzugsweise in geringen Mengen, z.B. etwa 0,1 bis 10 Vol.-%, z.B. 0,1 bis 5 Vol.-% bezogen auf das Dampfvolumen.

Überraschend wurde zudem festgestellt, dass mit Wasserdampf nicht nur Polyacrylate oder polyacrylathaltige Produkte von Restmonomermengen wie Acrylsäure befreit werden, sondern gleichfalls, besonders bei esterartigen Kettenverknüpfungen, die Kapazität der Wasseraufnahme nochmals deutlich erhöht werden. Dies lässt den Schluss zu, ohne auf eine bestimmte Theorie festgelegt werden zu wollen, dass ggf. einige Kettenbrücken gelöst werden und somit durch die dadurch stattfindenden Kettenverlängerungen zwischen zwei Vernetzungsstellen dieser Effekt zustande kommt. Somit kann ggf., z.B. durch Verwendung mindestens zweier Vernetzertypen unterschiedlicher Hydrolysestabilität oder mehrere, über Wasserdampfbehandlung oder Erhitzen des feuchten Produktes eine gegebene Wasseraufnahmefähigkeit nochmals nachträglich gesteigert werden.

Ein weiterer optionaler Gegenstand der vorliegenden Erfindung ist daher ein Verfahren zur Erhöhung der Wasseraufnahmekapazität von polycarboxylathaltigen Polymerprodukten und deren Mischungen, durch Wasserdampfbehandlung wie oben beschrieben, oder durch kurzzeitiges (etwa 10 Sekunden bis 1 Stunde) Hocherhitzen (Temperatur mindestens 140 °C, vorzugsweise mindestens 150 °C) nach der Polymerisation im feuchten Zustand.

Nach diesen Verfahren lassen sich alle partikelförmigen, polycarboxylathaltigen Produkte inklusive ihrer Ammoniumsalze, also Superabsorber wie auch das Hybridmaterial, mit einem Restanteil von Acrylsäure, ohne Intensivtrocknung bezüglich ihres Restmonomergehaltes auf ein Niveau mindern, dass eine Gefährdung und Geruchsbelästigung nicht mehr vorhanden ist. Außerdem kann die Wasseraufnahmekapazität des Polymers weiter erhöht werden. Ist dabei ein wasserfreies, carboxylathaltiges Produkt erwünscht, lässt sich ggf. eine schonende, emissionsfreie, offene Trocknung anschließen.

Da die Produkte nach der Herstellung in der Regel in Form von Blöcken oder größeren Stücken anfallen, kann üblicherweise eine Zerkleinerung vor der weiteren Verwendung vorgesehen werden, wobei konventionelle Zerkleinerungsverfahren für ggf. elastische, schwammartige Hybridmaterialien geeignet sind. Der erste Schritt ist meist ein Zerschneiden, so dass Scheiben, Matten oder kleinere Blöcke entstehen. Bleibt man bei der Mattenform, lassen sich durch weiteres Zerschneiden oder Stanzen die verschiedensten Formen erreichen. So können beispielsweise Vierkantstäbchen hergestellt werden, die den Pflanzenwurzeln nachträglich den für das Wachstum notwendigen Mineral- und Düngerbedarf liefern, wenn sie in deren Nahrungsbereich gesteckt werden. Es kann aber auch eine Häckselmaschine eingesetzt werden, womit die Herstellung von erdartigen Krumen beliebig einstellbarer Partikelgröße direkt möglich ist. Diese können in Aussehen und Beschaffenheit besonders gut an Humus angepasst sein. Im herstellungsfrischen Zustand kann noch eine gewisse Klebrigkeit vorhanden sein, die dazu genutzt werden kann weitere Feststoffe zuzumischen und die verschiedensten Formen und Gebilde durch einfaches Zusammenpressen der Krumen zu erzeugen.

Vorzugsweise werden Zerkleinerungsverfahren eingesetzt, deren Energieeintrag möglichst gering ist, zum Beispiel langsam drehende Schneid/Reissapparate (Shredder) ein- oder mehrwelliger Bauart, oder dergleichen. Der Energieeintrag bei der Zerkleinerung wird dabei in geeigneter Weise gewählt und beträgt vorzugsweise nicht mehr als 100W/kg, im Besonderen nicht mehr als 30W/kg.

Die Hybridmaterialien sind, beispielsweise in Granulat- oder Krumenform, zur Verwendung als Bodenhilfsstoffe in vielfältigen Anwendungsbereichen hervorragend geeignet. Als Bodenhilfsstoffe in geeigneter Menge in Erde, Sand, Humus, Torf und dergleichen oder dergleichen eingemischt fördern sie durch ihr Wasseraufnahme- und Speichervermögen die Keimung, das Wachstum und die Kultivierung von Pflanzen und können daher auch bei der Zumischung in ungünstige Erdböden bei schlechten Witterungsverhältnissen gute Pflanzresultate ergeben. Nebenbei erlauben sie zusätzlich eine Einschränkung der Bewässerungsintervalle und sind daher besonders in regenarmen Anbaugebieten nutzbringend. Eine besonders bevorzugte Anwendung der erfindungsgemäßen Erzeugnisse liegt in der Beimischung in Böden in ariden Regionen zur Wasserspeicherung.

Es ist möglich, die erfindungsgemäßen Hybridmaterialien auch alleine zur Pflanzenaufzucht zu verwenden. Eine besondere Ausführungsform hierfür ist der Einsatz der Erzeugnisse in Pflanzbehältem, die mit einem Wasserreservoir verbunden sind, beispielsweise durch Kapillarstäbe, aus denen sich die Produktschwämme das Wasser holen das ihnen durch die Pflanzenwurzeln genommen wird.

Die Krumen der erfindungsgemäßen Erzeugnisse mit ihren Poren und Taschen sind als Trägerstoff für die verschiedensten Feststoffe hervorragend geeignet. Von den zahlreichen Kombinationsmöglichkeiten soll hier die nachträgliche Abmischung mit Rizinusschrot genannt werden. Rizinusschrot fällt bei der Rizinusölgewinnung an und zählt zu den festen Düngemitteln. In alternativen Ausführungsformen kann anstelle von Rizinusschrot auch Rapsschrot, ein Restprodukt der Rapsölproduktion, verwendet werden. Mischungen dieser und weiterer Ölgewinnungsschrotrückstände sind selbstverständlich auch verwendbar.

Auch die Verwendung der Hybridmaterialien als Gülleabsorber bzw. Einstreumaterial in der Tierhaltung kann erwünscht sein. Möglich ist auch eine Kombination eines düngerfreien Produktes mit Holzmehl oder Holzspänen, das anschließend getrocknet als "Tierstreu" für die Tierhaltung, insbesondere bei Huftieren, genutzt werden kann. Interessant ist es auch, die Krumen nachträglich mit feinstkörnigen, oftmals staubenden, synthetischen Polymerpartikeln auszurüsten, deren Verwendung in reiner Form normalerweise problematisch ist. Durch die Klebewirkung der frischen Krumen des erfindungsgemäßen Produkts lassen sich auch Gewebe oder Vliese rieselfrei ausrüsten und überall dort einsetzen wo wasserabsorbierende Produkte gebunden und/oder fixiert gefragt sind. Hierzu zählen Hangbegrünungen, Beilagen für den Warentransport und Sacheinlagen.

Werden diese krumenhaltigen Gewebe und Vliese zusätzlich mit schwimmfähigen Natur- und Kunststoffen ausgestattet, können diese in Feuchtgebieten wie Pflanzenzucht, Reisanbau oder auch zur Insektenbekämpfung bei entsprechender Ausrüstung eingesetzt werden.

Bevorzugte Anwendungen des Hybridmaterials können ferner im Hygienebereich liegen, im Kosmetik- oder Wellnessbereich, wobei z.B. das Hybridmaterial als Bestandteil von Fangopackungen, Moor- oder Schlammbädern, oder für Mineralpackungen wie mineralstoffhaltige Gesichts- oder Körpermasken genutzt werden kann.

Aufgrund seines hohen spezifischen Gewichts und seiner Wasseraufnahme- und Quellfähigkeit kann das Hybridmaterial darüber hinaus in Dichtungsanwendungen verwendet werden, etwa als Zusatzstoff in Systemen zur Bohrlochabdichtung z.B. in Erdölbohrungen, als Bestandteil in Sandsäcken für die Deichreparatur oder -erhöhung, als Kabelschutzmittel, um das zerstörerische Eindringen von Meerwasser in die Kabel zu verhindern, oder auch als Füllmasse von elastischen Schläuchen, um bei Mauerdurchbrüchen, die für Rohr- und Kabelverlegungen notwendig sind, wirksame Abdichtungen gegenüber Grund- und Regenwasser herbeizuführen zu können.

Hieraus ist ersichtlich, dass die erfindungsgemäßen Erzeugnisse aufgrund ihrer außergewöhnlichen Eigenschaft und Taschenstruktur gleichzeitig Synergieträger und Trägermaterial für die unterschiedlichsten Fest- und Flüssigprodukte sind. Sie können also nicht nur als Wasserspeicher und Nährstoffquelle, sondern auch als Depotmaterial zur umweltschonenden Einbringung von Fungiziden, Herbiziden, Pestiziden, etc. genutzt werden.

Die Erfindung wird im weiteren durch die folgenden Beispiele beschrieben, welche nicht einschränkend gedacht sind.

### Beispiel 1

In einem Becherglas wurden 180 g vollentsalztes Wasser mit 150 g Acrylsäure bei Raumtemperatur vorgelegt. Dann wurden unter Rühren 7 g Harnstoff zugegeben und gelöst. Der pH-Wert betrug etwa 1,6. Danach wurden als Vernetzer 0,02g Wako V50 und 0,4 g Butandioldiacrylat zugesetzt. Anschließend wurden 460 g anorganische Feststoffe (Mischung aus Lavagesteinsmehl 200 g (Eifelgold', von Fa. Lavaunion, Deutschland, <0,2mm mittlere Korngröße), Bentonit 60 g (Agromont CA, von S&B Minerals, <0,065mm mittlere Korngröße) und 200 g Sand (von Quarzwerke Baums, L60, 0,2mm mittlere Korngröße) unter Rühren zugegeben und die Aufschlämmung homogenisiert. Durch Zusatz von 75 g KOH wurde die Acrylsäure teilweise neutralisiert. Anschließend wurde die Polymerisationsreaktion durch Zugabe von 0,15 g Kaliumdisulfit, 0,9 g Natriumperoxodisulfat und 0,45 g Ascorbinsäure (in Wasser gelöst) gestartet. Im Verlaufe der exothermen Polymerisationsreaktion wurde Wasserdampf und Kohlendioxidgas freigesetzt. Unter Zunahme des Volumens auf das Doppelte des Anfangsvolumens der Reaktionsmischung bildete sich ein geschlossenporiges elastisches, schwammartiges Produkt bei einer mittleren Reaktionstemperatur von 105°C. Etwa 4 % des eingesetzten Wassers verdampfte. Anschließend wurde das Produkt mittels eines langsam drehenden Schneidwerkzeugs zerkleinert. Das resultierende Hybridmaterial wies eine maximale Quellfähigkeit (24 Stunden vollentsalztes Wasser) von nahezu dem 30 fachen seines Eigengewichts und eine Shore-Härte von etwa 15 im fabrikationsfeuchten Zustand (Wassergehalt ca. 35 Gew.-%) auf. Figur 1A zeigt die schwammartige Struktur des so erhaltenen trockenen Materials, wobei eine Stecknadel als Größenvergleich dient. Figur 1B zeigt das gleiche Material im Wasser-gesättigten, aufgequollenen Zustand.

### Beispiel 2

Unter Verwendung der gleichen Materialien wie in Beispiel 1 beschrieben wurde ein weiterer Polymerisationsansatz durchgeführt, jedoch unter Verwendung von 260 g vollentsalztem Wasser. Der pH-Wert betrug etwa 1,6. Im Verlauf der exothermen Polymerisationsreaktion wurde bei einer mittleren Reaktionstemperatur von 80°C Wasserdampf (etwa 2 % Wasser wurde verdampft) und Kohlendioxidgas freigesetzt, wodurch sich das Volumen des Ansatzes um etwa 50 % vergrößerte. Das resultierende geschlossenporige, elastische, schwammartige Produkt wurde mittels eines langsam drehenden Schneidwerkzeugs schonend zerkleinert. Das resultierende Hybridmaterial wies eine maximale Quellfähigkeit (24 Stunden vollentsalztes Wasser) von etwa dem 30 fachen seines Eigengewichts und eine Shore-Härte von etwa 20 im fabrikationsfeuchten Zustand (Wassergehalt ca. 35 Gew.-%) auf.

### Beispiel 3

Ein Polymerisationsansatz wie in Beispiel 1 beschrieben wurde unter Verwendung der gleichen Materialien und der dort angegebenen Mengen durchgeführt. Während der exothermen Polymerisationsreaktion wurde das Reaktionsgefäß im Wasserbad gekühlt, so dass die mittlere Reaktionstemperatur bei etwa 65°C gehalten wurde. Die Volumenexpansion betrug ca. 15 %. Das Produkt wurde wie in Beispiel 1 beschrieben zerkleinert. Das resultierende Hybridmaterial wies eine maximale Quellfähigkeit (24 Stunden vollentsalztes Wasser) von etwa dem 25 fachen seines Eigengewichts und eine Shore-Härte von etwa 28 im fabrikationsfeuchten Zustand (Wassergehalt ca. 35 Gew.-%) auf.

### Beispiel 4 (Vergleichsbeispiel)

100,0 g Wasser, 560 g Kaliumhydroxidlösung (50 %) wurden mit 100,0 g Acrylsäure und 40,0 g wässriger Butandioldiacrylatlösung (0,8 Gew.-%) , 40,0 g Bentonit und 140,0 g Quarzsand sowie 120 g Lavagesteinsmehl (Eifellava) in fein gemahlener Form bei basischem pH-Wert vermischt, gut umgerührt und die Polymerisation durch Zugabe von 20,0 ml einer 1,0 Gew.-%-igen Natriumperoxodisulfatlösung, 10 ml einer 0,2 Gew.-%-igen Ascorbinsäurelösung und 10 ml einer 1,25 Gew.-%-igen Kaliumdisulfitlösung initiiert. Nach ca. 1 Minute, in der weiter gut gerührt wurde, ließ sich der Polymerisationsbeginn anhand der Wärmetönung unter Bildung von Mikroblasen an der Oberfläche feststellen. Nach ca. 3 Minuten war das Gemisch so zähviskos geworden, dass ein Absinken der Feststoffe nicht mehr möglich war und das Rühren eingestellt wurde. Das Polymerisat erfuhr nun durch das Ausblasen von Kohlendioxid in den nächsten Minuten eine Volumenvergrößerung. Das Polymerisat war ohne Schwierigkeiten dem Gefäß zu entnehmen und wurde mittels einer Schneidmühle zerkleinert und durch Umlufttrocknung getrocknet. Die Figur 2 zeigt das Quellverhalten des Materials nach Beispiel 4 (untere Kurve) gegenüber dem Hybridmaterial nach Beispiel 1 (obere Kurve) bei Kontakt des Hybridmaterials mit vollentsalztem Wasser. Die verwendeten Proben wurden hierbei jeweils nach bestimmten Zeitabständen aus dem Wasser entnommen, auf einem Sieb abgetropft und gewogen. Deutlich zu sehen ist, dass das Material nach Beispiel 1 zu Anfang erheblich schneller das Wasser aufnimmt und bereits nach etwa 2 Stunden mehr als das 20 fache seines Eigengewichts an Wasser aufgenommen hatte.

### Beispiel 5

Dieses Beispiel zeigt einen Vergleich der Biomasseentwicklung von Gras in Substrat welches 1 Gew.-% des Hybridmaterials aus Beispiel 1 enthält reinem Sand als Substrat. In Pflanzgefäßen mit 8 cm Durchmesser wurde entweder nur Feinsand der Fa. Haver & Boecker der Bezeichnung L 60 eingefüllt, oder Feinsand gemischt mit 1 Gew.-% des Hybridmaterials nach Beispiel 1, und anschließend jeweils eine Rasensaatgutmischung RSM 3.1 (50% Lolium perenne, 50 % Poa pratensis) eingesät. Zur Reproduzierbarkeit wurde mit 4 facher Wiederholung gearbeitet. Bedingungen: 25°C konstant, 10 kLux bei einer Beleuchtungsdauer von 12 h
- Wasserzufuhr:: 3 mm/d, 3-Tagesrhythmus, entsprechend 57 ml alle 3 Tage
1,5 mm/d, 6-Tagesrhythmus, entsprechend 57 ml alle 6 Tage
- Varianten:: Variante 0-3/57 I-IV = reiner Sand, 57ml H₂O alle 3 Tage
Variante 1-3/57 I-IV = 1 % Material aus Beispiel 1, 57ml H₂O alle 3 Tage
Variante 0-6/57 I-IV = reiner Sand, 57ml H₂O alle 6 Tage
Variante 1-6/57 I-IV = 1 % Material aus Beispiel 1, 57ml H₂O / 6 Tage

Bereits kurz nach dem Auflaufen des Grases konnte beobachtet werden, dass sich das Gras bei Zugabe des wasserquellbaren Hybridmaterials deutlich kräftiger entwickelte als ohne. Dies waren in allen 4 Wiederholungen gleichermaßen zu beobachten. Figur 3 zeigt die unterschiedlichen Wuchshöhen des Vergleichs der Variante 0-3 ohne Hybridmaterial (linke vier Töpfe) mit Variante 1-3 mit Hybridmaterial (rechte vier Töpfe), also bei einer Bewässerung von 57 ml alle drei Tage, wobei Figur 3B eine Ausschnittsvergrößerung des Fotos von Figur 3A darstellt. Figur 4 zeigt die unterschiedlichen Wuchshöhen des Vergleichs der Variante 0-6 ohne Hybridmaterial (linke vier Töpfe) mit Variante 1-6 mit Hybridmaterial (rechte vier Töpfe), also bei einer Bewässerung von 57 ml alle sechs Tage, wobei Figur 4B eine Ausschnittsvergrößerung des Fotos von Figur 4A darstellt.

Zu drei Zeitpunkten wurden die Wuchshöhen des Grases gemessen. Zu allen Zeitpunkten lag die Grashöhe bei 1 % wasserquellbaren Hybridmaterial aus Beispiel 1 deutlich über der der unbehandelten Variante, und zwar mit jeweils etwa 18 bis 27 %. Die Unterschiede waren sowohl bei 1,5 mm/d Wasserzugabe als auch bei 3 mm/d zu verzeichnen. Die Ergebnisse zeigen, dass das Wachstum der Pflanzen um mehr als 20 % erhöht werden kann, der Trockenmasseertrag des Grases erhöht und die Wassereffizienz bei einer Kombination von reduzierter Wasserzufuhr und der Zugabe des neuartigen wasserquellbaren Hybridmaterials aus Beispiel 1 deutlich gesteigert werden kann.

### Beispiel 6

Das Granulat nach Beispiel 4 wurde mit 0,1 Gew.-% des Fungizids Parmetol^{®} DF12 homogen gemischt und mit Wasser maximal getränkt. Das feuchte Granulat wurde für 12 Monate offen an Luft bei Raumtemperatur gelagert und weiter feucht gehalten. Es erfolgte keine Besiedlung mit Mikroorganismen.

Die vorliegende Erfindung wird im Folgenden anhand der beigefügten Ansprüche näher definiert, welche grundsätzlich nicht einschränkend zu verstehen sind.
Die folgenden nummerierten Abschnitte geben bevorzugte Ausführungsformen der Erfindung wieder:
1. Wasserquellbares Hybridmaterial umfassend eine strukturvernetzte Polymermatrix und darin gebundene anorganische Feststoffteilchen, wobei das Hybridmaterial ein zeitabhängiges Quellverhalten aufweist, welches einer Wasseraufnahme von mindestens dem 7,5 fachen des Eigengewichts des Hybridmaterials innerhalb einer Stunde entspricht.
2. Hybridmaterial nach Ausführungsform 1,
   dadurch gekennzeichnet, dass die Wasseraufnahme mindestens dem 10 fachen, bevorzugt dem 12,5 fachen, vorzugsweise mindestens dem 15 fachen des Eigengewichts des Hybridmaterials innerhalb der ersten Stunde entspricht.
3. Hybridmaterial nach Ausführungsform 1 oder 2,
   dadurch gekennzeichnet, dass die anorganischen Feststoffteilchen gemahlene Mineralstoffe umfassen, die mindestens ein Material ausgewählt aus Quarzsand, Ton, Schiefer, Sedimentgesteine, Meteoritengesteine, Eruptivgesteine, Grauwacke, Gneis, Trass, Basalt, Diabas, Dolomit, Magnesit, Bentonit, pyrogene Kieselsäure und Feldspat, umfassen.
4. Hybridmaterial nach einer der vorhergehenden Ausführungsformen,
   dadurch gekennzeichnet, dass die Polymermatrix mindestens ein Homopolymer und/oder Copolymer von ethylenisch ungesättigten Komponenten, insbesondere der Acrylsäure oder von Acrylsäurederivaten umfasst.
5. Hybridmaterial nach einer der vorhergehenden Ausführungsformen,
   dadurch gekennzeichnet, dass dieses mindestens einen wasserlöslichen, wasserquellbaren und/oder in Wasser gelösten Zusatzstoff, ausgewählt aus mindestens einem aus Alkalisilikat, Kaliwasserglas, Natriumwasserglas, Kaliumhydroxid, Natriumhydroxid, Kieselsäure, Alkaliphosphat, Alkalinitrat, Erdalkalihydrogenphosphat, Phosphorsäure, Borsäure, Farbstoffe, Geruchsstoffe, Düngemittel, Harnstoff, Harnsäure, Guanidin, Glykol, Glycerin, Polyethylenglykol und Stärke enthält.
6. Hybridmaterial nach einer der vorhergehenden Ausführungsformen,
   dadurch gekennzeichnet, dass dieses mindestens einen organischen Zusatzstoff aus der Gruppe der Mikroorganismen, Bakterien Pilze, Algen, Hefen, Fungizide, Pestizide, Herbizide, Zellulose, Derivate von Stärken, Kunststoffen oder Polysachariden; Holz, Stroh, Torf, Altpapier, chromfreies Leder und Recyclinggranulat, Kunststoffgranulat, Faserstoffe oder Vliesstoffe umfasst.
7. Verfahren zur Herstellung eines wasserquellbaren Hybridmaterials nach einer der vorhergehenden Ausführungsformen, umfassend folgende Schritte:
   a) Bereitstellen einer Reaktionsmischung umfassend mindestens eine polymerisierbare Komponente und mindestens ein geeignetes Lösungsmittel, wobei der pH-Wert der Reaktionsmischung kleiner als 7 ist;
   b) Anschließend einmischen von anorganischen Feststoffteilchen in die Reaktionsmischung;
   c) Zugabe mindestens eines Vernetzers;
   d) Starten der Polymerisationsreaktion; und
   e) Steuern der Polymerisationsreaktion, so daß unter Volumenvergrößerung relativ zum Volumen der Reaktionsmischung ein schwammartiges, wasserquellbares Hybridmaterial umfassend eine strukturvernetzte Polymermatrix und darin gebundene anorganische Feststoffteilchen erhalten wird.
8. Verfahren nach Ausführungsform 7, wobei in Schritt b) zusätzlich organische Feststoffteilchen eingemischt werden.
9. Verfahren nach Ausführungsform 7 oder 8,
   dadurch gekennzeichnet, dass das Steuern der Polymerisationsreaktion das Steuern der Reaktionswärme umfasst.
10. Verfahren nach Ausführungsform 9,
   dadurch gekennzeichnet, dass die Reaktionswärme der exothermen Polymerisationsreaktion so gesteuert wird, dass von etwa 0,1 bis 30 Gew.-%, vorzugsweise von etwa 2 bis 15 Gew.-%, des mindestens einen Lösungsmittels, vorzugsweise Wasser, verdampfen.
11. Verfahren nach Ausführungsform 9 oder 10,
   dadurch gekennzeichnet, dass die Reaktionswärme durch das Mengenverhältnis der mindestens einen polymerisierbaren Komponente zu dem mindestens einen geeigneten Lösungsmittels bzw. das Volumen des Lösungsmittels, vorzugsweise Wasser, gesteuert wird.
12. Verfahren nach Ausführungsform 11,
   dadurch gekennzeichnet, dass das Mengenverhältnis der mindestens einen polymerisierbaren Komponente zu dem mindestens einen geeigneten Lösungsmittel, vorzugsweise Wasser, zwischen etwa 1:1 bis 1:5 liegt.
13. Verfahren nach einer der Ausführungsformen 9 bis 12,
   dadurch gekennzeichnet, dass die Reaktionswärme durch Kühlen der Reaktionsmischung gesteuert wird.
14. Verfahren nach einer der Ausführungsformen 7 bis 13,
   dadurch gekennzeichnet, dass durch Steuern der Polymerisationsreaktion eine Volumenvergrößerung relativ zum Volumen der Reaktionsmischung vor Einsetzen der Polymerisationsreaktion von mindestens 10 %, vorzugsweise mindestens 20 %, insbesondere mindestens 50 %, und besonders bevorzugt mindestens 100 % bewirkt wird.
15. Verfahren nach einer der Ausführungsformen 7 bis 14,
   dadurch gekennzeichnet, daß die Volumenvergrößerung zumindest teilweise durch eine geeignete Menge mindestens eines Gas-freisetzenden Stoffes in der Reaktionsmischung, vorzugsweise Harnstoff, bewirkt wird.
16. Verfahren nach einer der Ausführungsformen 10 bis 18,
   dadurch gekennzeichnet, dass die die mittlere Reaktionstemperatur der Polymerisationsreaktion zwischen etwa 50 °C und 130 °C gehalten wird, vorzugsweise von etwa 60 bis 110 °C, insbesondere von etwa 70 bis 100 °C, und die Starttemperatur der Reaktionsmischung zwischen etwa 4°C und etwa 40 °C, vorzugsweise etwa bei Raumtemperatur liegt.
17. Verfahren nach einer der Ausführungsformen 7 bis 16,
   dadurch gekennzeichnet, dass das mindestens eine Lösungsmittel protisch-polare Lösungsmittel, insbesondere Wasser, umfasst.
18. Verfahren nach einer der Ausführungsformen 7 bis 17,
   dadurch gekennzeichnet, dass der pH-Wert der Reaktionsmischung vor Zugabe der anorganischen Feststoffteilchen unter pH 6,5 und vorzugsweise zwischen pH 1 und pH 6 liegt.
19. Verfahren nach einer der Ausführungsformen 7 bis 18,
   dadurch gekennzeichnet, dass die mindestens eine polymerisierbare Komponente ausgewählt ist aus wasserlöslichen, ethylenisch ungesättigten, Säuregruppen enthaltenden Monomere umfassend Acrylsäure, Methacrylsäure, Ethacrylsäure, Sorbinsäure, Maleinsäure, Fumarsäure, Itaconsäure, Vinylsulfonsäure, Methacrylaminoalkylsulfonsäure, Vinylphosphonsäure, oder Vinylbenzolphosphonsäure.
20. Verfahren nach einer der Ausführungsformen 7 bis 19,
   dadurch gekennzeichnet, dass die Reaktionsmischung ferner mindestens ein wasserlösliches, ethylenisch ungesättigtes Comonomer ausgewählt aus ungesättigten Aminen wie Acrylamid, Methacrylamid, N-Alkylacrylamid, N-Alkylmethacrylamid, N-Dialkylaminoacrylamid, N-Dialkylaminomethacrylamid, N-Methylolacrylamid, N-Methulolmethacrylamid, N-Vinylamid, N-Vinylformamid, N-Vinylacetamid, N-Vinyl-n-methylacetamid, N-Vinyl-n-methylacetamid, N-Vinyl-n-formamid; Vinylpyrrolidon, Hydroxyethylenacrylat, Hydroxyethylmethacrylat, Acrylsäureester und/oder Methacrylsäureester umfasst.
21. Verfahren nach einer der Ausführungsformen 7 bis 20,
   dadurch gekennzeichnet, dass der mindestens eine Vernetzer ausgewählt ist aus Verbindungen die mindestens zwei ethylenisch ungesättigte Gruppen, oder mindestens eine ethylenisch ungesättigte Gruppe und mindestens eine weitere funktionelle Gruppe enthalten, die mit Säuregruppen reagieren kann.
22. Verfahren nach Ausführungsform 21,
   dadurch gekennzeichnet, dass der mindestens eine Vernetzer ausgewählt ist aus Methylenbisacrylamid, Mono-, Di- und Polyester der Acrylsäure, Methacrylsäure, Itaconsäure, Maleinsäure, Ester dieser Säuren mit Allylalkohol oder seinen oxalkylierten Homologen, mehrwertigen Alkoholen, Butandiol, Hexandiol, Polyethylenglykol, Trimethylolpropan, Pentaeryltrit, Glycerin, Polyclycerin, oxalkylierten Homologe dieser mehrwertigen Alkohole, Dihydroxyalkylmonoester, Butandioldiacrylat; Allylacrylamid, Triallylzitrat, Trimonoallyl, Polyethylenglykolethercitrat, N-Diallylacrylamid, Diallylphthalat, Triallylcitrat, Trimonoallyl-polyethylenglykolether-citrat, Allylether von Di- und Polyolen oder deren Oxethylate; Polyallylether von Glycerin, Trimethylolpropan, Pentaerythrit oder deren Oxethylate; Tetraallyloxyethan, Polyglycidylallylether, Ethylenglykoldiglycidylether, Glyceringlycidylether; Diamine oder deren Salze mit mindestens zwei ethylenisch ungesättigten Substituenten; Di- oderTriallylamin, oder Tetraallylammoniumchlorid.
23. Verfahren nach einer der Ausführungsformen 7 bis 22,
   dadurch gekennzeichnet, dass die Polymerisation mittels eines geeigneten Redoxsystems oder durch Fotokatalyse in Gegenwart geeigneter Sensibilisatoren oder Kombinationen davon gestartet wird.
24. Verfahren nach einer der Ausführungsformen 7 bis 23,
   dadurch gekennzeichnet, dass das Hybridmaterial zum Austreiben von Monomerrückständen, zur Nachvernetzung, zur Teilhydrolyse und/oder zur Trocknung thermisch oder chemisch nachbehandelt wird, etwa durch Erhitzen im Umluftofen, mit Heißdampf bei Temperaturen von etwa 100 bis etwa 150°C, oder durch Einblasen von erhitztem Gas wie Schwefeldioxid oder Ammoniak, beides ggf. unter Druck.
25. Hybridmaterial nach einer der Ausführungsformen 1 bis 6,
   erhältlich durch ein Verfahren gemäß einer der Ausführungsformen 7 bis 24.
26. Hybridmaterial nach einer der Ausführungsformen 1 bis 6 oder 25,
   gekennzeichnet durch einen Restfeuchtegehalt von mindestens etwa 0,1 Gew.%, vorzugsweise bis zu etwa 60 Gew.-%, besonders bevorzugt bis zu etwa 35 Gew.-%, bezogen auf das Gesamtgewicht des restfeuchten Materials.
27. Hybridmaterial nach einer der Ausführungsformen 1 bis 6 oder 25 bis 26,
   gekennzeichnet durch eine Shore A Härte (DIN 53505) von mindestens etwa 25, bevorzugt etwa 30 bis 50, nach 12 Stunden Trocknung des Hybridmaterials bei etwa 40 °C.
28. Hybridmaterial nach einer der Ausführungsformen 1 bis 6 oder 25 bis 27,
   gekennzeichnet durch eine Shore A Härte (DIN 53505) von mindestens etwa 1, vorzugsweise etwa 2 bis 10, im gesättigten Zustand nach Lagerung des Materials über 24 Stunden in vollentsalztem Wasser.
29. Verwendung des Hybridmaterials nach einer der Ausführungsformen 1 bis 6 oder 25 bis 28, in der Landwirtschaft, in Wein-, Garten- und Landschaftsbau, für Sport-, Golf- und Gartenplätze, zur Dachbegrünung oder Grabbegrünung, zur Stabilisierung von Solitärpflanzen (Bäumen), Hang- oder Dünenbefestigung, zur Bodenverbesserung, als Wasser- und Wirkstoffspeicher, als Tierstreu, zur Desertifikationsbekämpfung in ariden Gebieten, zur Absorption von Gerüchen, insbesondere bei Tieren die in Ställen gehalten werden, zur Absorption und Desorption von Düngemitteln, Pestiziden, Fungiziden, Mikroorganismen, und/oder in Kombination mit Saatgut als Keimungsbeschleuniger.
30. Bodenhilfsstoff enthaltend ein Hybridmaterial nach einer der Ausführungsformen 1 bis 6 oder 25 bis 29, und mindestens einen Stoff ausgewählt aus Erdboden, Humus, Sand, Torf und dergleichen.

## Patentansprüche

1. Wasserquellbares Material umfassend eine strukturvernetzte Polymermatrix und darin gebundene anorganische Feststoffteilchen, wobei
- das Material ein zeitabhängiges Quellverhalten aufweist, welches einer Wasseraufnahme bei 20 bis 23 °C von mindestens dem 12,5-fachen des Eigengewichts des trockenen Materials innerhalb der ersten Stunde entspricht;
- der Anteil an anorganischen Feststoffen bei mindestens 50 Gew.-% liegt;
- das Material nach einer Stunde Lufttrocknung bei 40 °C eine Shore A Härte nach DIN 53505 von mindestens 25 aufweist; und
- das Material weniger als 1000 ppm Monomerrückstände enthält.

2. Material nach Anspruch 1,
**dadurch gekennzeichnet, dass die** Wasseraufnahme mindestens dem 15 fachen des Eigengewichts des Hybridmaterials innerhalb der ersten Stunde entspricht.

3. Material nach Anspruch 1 oder 2,
**dadurch gekennzeichnet, dass** die anorganischen Feststoffteilchen gemahlene Mineralstoffe umfassen, die mindestens ein Material ausgewählt aus Quarzsand, Ton, Schiefer, Sedimentgesteine, Meteoritengesteine, Eruptivgesteine, Grauwacke, Gneis, Trass, Basalt, Diabas, Dolomit, Magnesit, Bentonit, pyrogene Kieselsäure und Feldspat, umfassen.

4. Material nach einem der vorhergehenden Ansprüche,
**dadurch gekennzeichnet, dass** die Polymermatrix mindestens ein Homopolymer und/oder Copolymer von ethylenisch ungesättigten Komponenten, insbesondere der Acrylsäure oder von Acrylsäurederivaten umfasst.

5. Material nach einem der vorhergehenden Ansprüche,
**dadurch gekennzeichnet, dass** dieses mindestens einen wasserlöslichen, wasserquellbaren und/oder in Wasser gelösten Zusatzstoff, ausgewählt aus mindestens einem aus Alkalisilikat, Kaliwasserglas, Natriumwasserglas, Kaliumhydroxid, Natriumhydroxid, Kieselsäure, Alkaliphosphat, Alkalinitrat, Erdalkalihydrogenphosphat, Phosphorsäure, Borsäure, Farbstoffe, Geruchsstoffe, Düngemittel, Harnstoff, Harnsäure, Guanidin, Glykol, Glycerin, Polyethylenglykol und Stärke enthält.

6. Material nach einem der vorhergehenden Ansprüche,
**dadurch gekennzeichnet, dass** dieses mindestens einen organischen Zusatzstoff aus der Gruppe der Mikroorganismen, Bakterien Pilze, Algen, Hefen, Fungizide, Pestizide, Herbizide, Zellulose, Derivate von Stärken, Kunststoffen oder Polysachariden; Holz, Stroh, Torf, Altpapier, chromfreies Leder und Recyclinggranulat, Kunststoffgranulat, Faserstoffe oder Vliesstoffe umfasst.

7. Material nach einem der vorhergehenden Ansprüche,
**dadurch gekennzeichnet, dass** es weniger als 500 ppm, bevorzugt weniger als 300 ppm, weiter bevorzugt weniger als 100 ppm Monomerrückstände enthält.

8. Verfahren zur Herstellung eines wasserquellbaren Hybridmaterials nach einem der vorhergehenden Ansprüche, umfassend folgende Schritte:
a) Bereitstellen einer Reaktionsmischung umfassend mindestens eine polymerisierbare Komponente und mindestens ein geeignetes Lösungsmittel, wobei der pH-Wert der Reaktionsmischung kleiner als 7 ist;
b) Anschließend einmischen von anorganischen Feststoffteilchen in die Reaktionsmischung;
c) Zugabe mindestens eines Vernetzers;
d) Starten der Polymerisationsreaktion; und
e) Steuern der Polymerisationsreaktion, so dass unter Volumenvergrößerung relativ zum Volumen der Reaktionsmischung ein schwammartiges, wasserquellbares Hybridmaterial umfassend eine strukturvernetzte Polymermatrix und darin gebundene anorganische Feststoffteilchen erhalten wird.

9. Verfahren nach Anspruch 8,
**dadurch gekennzeichnet, dass** das Steuern der Polymerisationsreaktion das Steuern der Reaktionswärme umfasst und die Reaktionswärme der exothermen Polymerisationsreaktion so gesteuert wird, dass von etwa 0,1 bis 30 Gew.-%, vorzugsweise von etwa 2 bis 15 Gew.-%, des mindestens einen Lösungsmittels, vorzugsweise Wasser, verdampfen.

10. Verfahren nach einem der Ansprüche 9,
**dadurch gekennzeichnet, dass** die die mittlere Reaktionstemperatur der Polymerisationsreaktion zwischen etwa 50 °C und 130 °C gehalten wird, vorzugsweise von etwa 60 bis 110 °C, insbesondere von etwa 70 bis 100 °C, und die Starttemperatur der Reaktionsmischung zwischen etwa 4°C und etwa 40 °C, vorzugsweise etwa bei Raumtemperatur liegt.

11. Verfahren nach einem der Ansprüche 8 bis 10,
**dadurch gekennzeichnet, dass** der pH-Wert der Reaktionsmischung vor Zugabe der anorganischen Feststoffteilchen unter pH 6,5 und vorzugsweise zwischen pH 1 und pH 6 liegt.

12. Verfahren nach einem der Ansprüche 8 bis 11,
**dadurch gekennzeichnet, dass** die mindestens eine polymerisierbare Komponente ausgewählt ist aus wasserlöslichen, ethylenisch ungesättigten, Säuregruppen enthaltenden Monomere umfassend Acrylsäure, Methacrylsäure, Ethacrylsäure, Sorbinsäure, Maleinsäure, Fumarsäure, Itaconsäure, Vinylsulfonsäure, Methacrylaminoalkylsulfonsäure, Vinylphosphonsäure, oder Vinylbenzolphosphonsäure.

13. Verfahren nach einem der Ansprüche 8 bis 12,
**dadurch gekennzeichnet, dass** die Reaktionsmischung ferner mindestens ein wasserlösliches, ethylenisch ungesättigtes Comonomer ausgewählt aus ungesättigten Aminen wie Acrylamid, Methacrylamid, N-Alkylacrylamid, N-Alkylmethacrylamid, N-Dialkylaminoacrylamid, N-Dialkylaminomethacrylamid, N-Methylolacrylamid, N-Methulolmethacrylamid, N-Vinylamid, N-Vinylformamid, N-Vinylacetamid, N-Vinyl-n-methylacetamid, N-Vinyl-n-methylacetamid, N-Vinyl-n-formamid; Vinylpyrrolidon, Hydroxyethylenacrylat, Hydroxyethylmethacrylat, Acrylsäureester und/oder Methacrylsäureester umfasst.

14. Verfahren zum Entfernen von restlicher Acrylsäure aus partikelförmigen, polycarboxylathaltigen Polymerprodukten und Mischungen enthaltend diese Polymerprodukte durch Behandlung mit Wasserdampf bei einer Temperatur von 100 °C bis 160 °C.

15. Verfahren gemäß Anspruch 14, wobei dem Wasserdampf zusätzlich Ammoniak und/oder Schwefeldioxid zugemischt werden.
